# EUROPEAN PATENT APPLICATION

(11) **EP 4 525 137 A1**
(43) Date of publication of application: **19.03.2025**
(21) Application number: 24185304.3
(22) Date of filing: 28.06.2024
(51) Int. Cl.: H01M 10/54, H01M 4/04, H01M 4/131, H01M 4/48, C22B 1/02

(54) **ELECTRODE RECYCLING METHOD AND BATTERY MANUFACTURING METHOD**

(30) Priority: 15.09.2023 JP 2023150439; 24.05.2024 JP 2024085039
(71) Applicant: Kabushiki Kaisha Toshiba, Tokyo 105-0023 (JP)
(72) Inventor: KONDO, Asato, Minato-ku, Tokyo, 105-0023 (JP); FUKAYA, Taro, Minato-ku, Tokyo, 105-0023 (JP); SEKIGUCHI, Yumiko, Minato-ku, Tokyo, 105-0023 (JP); KUSAMA, Tomoe, Minato-ku, Tokyo, 105-0023 (JP)
(74) Representative: Hoffmann Eitle

(57) **Abstract**

According to one approach, an electrode recycling method includes performing (S1) a heat treatment on a first electrode (1), the first electrode (1) including a first current collector (2) and an active material-containing layer (3) supported by the first current collector (2), the active material-containing layer (3) containing an active material, a binder, and a conductor, the heat treatment being performed at a temperature below a melting point of the first current collector (2) to decompose the binder and obtain a heat-treated object;
separating (S2) the first current collector (2) from the heat-treated object to obtain a mixture containing the active material and the conductor; and
manufacturing (S3) a second electrode using the mixture.

## Description

### FIELD

This disclosure relates generally to an electrode recycling method and a battery manufacturing method.

### BACKGROUND

A secondary battery which includes an electrode containing a niobium-containing oxide or a niobium titanium-containing oxide has been a subject of development. There is a demand for an improved recycling rate in the manufacturing process for a secondary battery and a resulting reduction in manufacturing costs.

### BRIEF DESCRIPTION OF THE DRAWINGS

FIG. 1 is a flowchart showing an exemplary flow of a method according to a first approach.
FIG. 2 is a flowchart showing an exemplary flow of an electrode manufacturing method in the method according to the first approach.
FIG. 3 is a plan view showing one example of a first electrode.
FIG. 4 is a sectional view of the electrode taken along the line IV-IV indicated in FIG. 3.
FIG. 5 is a sectional view of the electrode taken along the line V-V indicated in FIG. 3.
FIG. 6 is a diagram showing one example of a result of measurement performed according to evolved gas analysis-mass spectrometry (EGA-MS).
FIG. 7 is a diagram showing one example of a result of measurement performed according to pyrolysis-gas chromatography-mass spectrometry (Pyro-GC-MS).
FIG. 8 is a flowchart showing an exemplary flow of a method according to a second approach.
FIG. 9 is a partially cutaway perspective view showing an example of a battery manufactured by the method according to an approach.
FIG. 10 is an enlarged sectional view of a part A indicated in FIG. 9.
FIG. 11 is a flowchart showing another exemplary flow of the method according to the first approach.

### DETAILED DESCRIPTION

A problem to be solved is to provide a battery recycling method which can improve an electrode recycling rate, and a battery manufacturing method which utilizes the electrode recycling method.

According to an approach, an electrode recycling method is provided. This electrode recycling method includes the steps of:
performing a heat treatment on a first electrode, the first electrode including a first current collector and an active material-containing layer supported by the first current collector, the active material-containing layer containing an active material, a binder, and a conductor, the heat treatment being performed at a temperature below a melting point of the first current collector to decompose the binder and obtain a heat-treated object;
separating the first current collector from the heat-treated object to obtain a mixture containing the active material and the conductor; and
manufacturing a second electrode using the mixture.

Also, according to an approach, a battery manufacturing method is provided. This battery manufacturing method includes manufacturing a battery with a recycled electrode obtained by the method according to the foregoing approach.

### (First Approach)

According to the first approach, an electrode recycling method is provided. An electrode recycling method I, which is one example of the electrode recycling method according to the first approach, will be described with reference to the drawings. The first approach assumes manufacture of a fresh electrode using as a first electrode a subject electrode. Such a subject electrode (a first electrode) includes a first current collector and an active material-containing layer which is supported by (or formed on or over) the first current collector and includes an active material, a binder, and an electric conductor. The subject electrode does not retain an electrolyte. Examples of the subject electrode include a disposed or to-be-disposed electrode which may be produced in the course of an electrode or battery manufacturing process. The subject electrode may also be called a waste material or a waste electrode. One example of the subject electrode is an irregular or out-of-spec electrode which may be produced in the course of an electrode or battery manufacturing process. Another example of the subject electrode is an electrode which has been stored in an unused state. Yet another example of the subject electrode is an electrode fragment which may be a scrap produced from a cutting step. In instances where the subject electrode is a waste electrode produced during a manufacturing process, the composition of its active material-containing layer is normally known. Also, its active material involves almost no deterioration since it has never been used or, for example, never undergone charge and discharge processes. As such, use of the active material and the conductor separated from the subject electrode (first electrode) enables easy regeneration of an electrode as a second electrode which includes an active material-containing layer having the same composition as the active material-containing layer of the subject electrode.

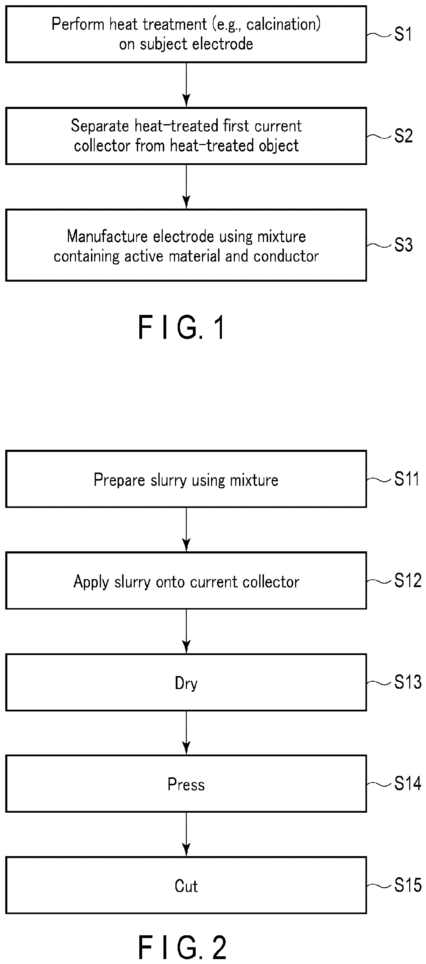

FIGS. 1 and 2 are flowcharts each showing a method according to the first approach. In one example, the method according to the first approach includes steps S1 to S3 shown in FIG. 1. Each step will be described.

### <Step S1>

A heat treatment is performed on the subject electrode as the first electrode to thermally decompose the binder and to thereby obtain a heat-treated object.

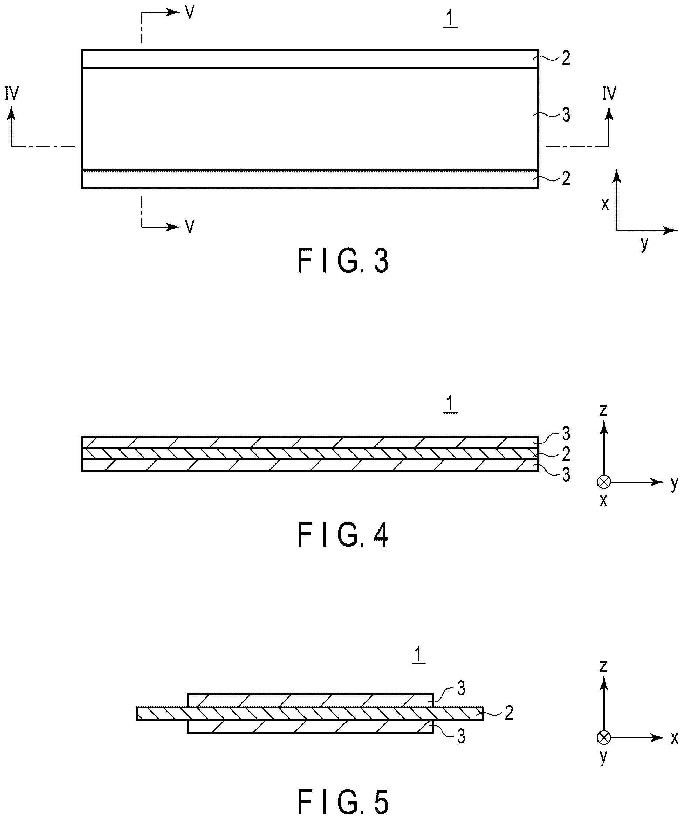

One example of the subject electrode, which is denoted by reference sign "1" here, is shown in FIGS. 3 to 5. FIGS. 3 to 5 assume the long side direction of the subject electrode 1 to be a y-axis direction. The short side direction of the subject electrode 1 is assumed to be an x-axis direction. The thickness direction of the subject electrode 1 is assumed to be a z-axis direction. The subject electrode 1 includes a first current collector 2 and an active material-containing layer 3 which includes an active material, a binder, and a conductor. In one example, the first current collector 2 is a conductive sheet member. The description will assume that this sheet member has a surface parallel to the x-y plane and of a quadrilateral shape. In the example shown in FIG. 3, the surface is rectangular. While FIGS. 3 to 5 assume a structure in which multiple of the active material-containing layers 3 are supported by the respective two surfaces of the first current collector 2 which are parallel to the x-y plane, the approach is not limited to such a structure. For example, the active material-containing layer 3 may be supported only by one surface of the first current collector 2 parallel to the x-y plane. FIGS. 3 to 5 also assume that the active material-containing layers 3 are supported by the respective surfaces of the first current collector 2 except for two end portions of the first current collector 2 in the short side direction, but this does not pose any limitation. Each active material-containing layer 3 may be supported by the associated surface of the first current collector 2 except for one short-side-direction end portion of the first current collector 2, or may be supported by the entirety of the surface. Note that the portion or portions of the first current collector 2 that do not support the active material-containing layers 3 may function as current-collecting tabs.

The subject electrode 1 is subjected to a heat treatment at a temperature below the melting point of the first current collector so that the first current collector, although heated, will not be melted but allowed to substantially keep its original properties (e.g., its shape) as those before the heat treatment. Accordingly, the heat-treated first current collector can be easily separated from the whole heat-treated object. As one example, the heat treatment may be calcination. Calcination may employ a furnace or the like as the heating means. A process of calcination can therefore be carried out in a simple manner.

The first current collector may preferably be conductive. The first current collector may be adjusted into various compositions according to types or kinds of the active material. In one example, the first current collector is formed of a conductive material which is electrochemically stable at the potential at which lithium (Li) insertion and extraction take place. One exemplary form of the first current collector contains at least one selected from the group consisting of copper, nickel, stainless steel, aluminum, and aluminum alloy. The first current collector may contain at least one of aluminum and/or aluminum alloy. The first current collector containing at least one of aluminum and/or aluminum alloy may have a melting point of approximately 660 °C. The temperature below the melting point of the first current collector may be set to, for example, 660 °C or below, or preferably below 660 °C. The first current collector may be formed into various thicknesses according to the type, size, etc., of the battery, but one exemplary thickness is 5 µm or more and 20 µm or less.

The electric conductor is not particularly limited and may contain a carbon material. In the case where the conductor employs a carbon material, setting the heat treatment temperature to 660 °C or below can prevent the conductor from decomposing (being pyrolyzed). By successfully preventing the loss of the conductor, electrical conductive paths among active material particles in the recycled electrode can be secured. Examples of the carbon material include carbon fiber such as vapor grown carbon fiber (VGCF), carbon nanotubes, carbon black such as acetylene black, and graphite. Each of these may be independently used as the conductor, or two or more of them may be combined for use as the conductor. The conductor may be present independently of the active material, or may be supported by surfaces of the particles of the active material. The conductor in the instance of employing carbon nanotubes is easily entangled with the surfaces of the active material particles. Also, the conductor in the instance of employing carbon black such as acetylene black is easily adhered to the surfaces of the active material particles. The conductor containing at least one of carbon nanotubes and/or carbon black can provide an increased area of contact with the active material particles. Accordingly, such a conductor enables the recycled electrode to easily maintain the conductive paths among active material particles in a good state.

The heat treatment temperature may be set to be lower than the melting point of the first current collector by at least 20 °C. This allows for more reliable prevention of the melting of the first current collector. Moreover, loss of the conductor due to the heat can also be prevented to a more reliable extent. The heat treatment temperature may be set to, for example, 640 °C or below, or more preferably below 640 °C.

One exemplary form of the decomposition of the binder is pyrolysis or thermal decomposition. The binder decomposition (pyrolysis) can serve the purpose if it takes place in at least a part of the binder contained in the subject electrode. This is because the decomposition of a part of the binder can lead to a lowered binding strength between the active material or the conductor and the first current collector. This facilitates the separation of the active material and the conductor from the first current collector. In order to promote the decomposition reaction of the binder, the lower limit of the heat treatment temperature may be set to a temperature equal to or higher than the decomposition temperature of the binder. Here, if multiple kinds of binders are used, the highest one of their respective decomposition temperatures is preferably set as the lower limit of the heat treatment temperature. Also, if two kinds of binders are used, the higher one of their respective decomposition temperatures is preferably set as the lower limit of the heat treatment temperature. Such a decomposition temperature of the binder will be described in detail later. The binder is not particularly limited and may contain an organic substance. Preferably, the binder is a water-soluble binder, or a hydrophilic binder such as an emulsion which permits water dispersion. The hydrophilic binder may be an organic hydrophilic binder. Examples of the organic hydrophilic binder include a polyacrylic acid compound, styrene-butadiene rubber (SBR), carboxymethyl cellulose (CMC), and a salt of CMC. Each of these may be independently used as the binder, or two or more of them may be combined for use as the binder.

The heat treatment temperature may be set to, for example, 400 °C or higher and 660 °C or below. Setting the heat treatment temperature to 400 °C or higher can promote the decomposition reaction of the binder. Also, setting the heat treatment temperature to 660 °C or below can prevent the melting of the first current collector. This can also prevent the loss of the conductor.

An atmosphere for performing the heat treatment is not particularly limited. The atmosphere may have discretionarily set ranges of an oxygen concentration, a moisture amount, etc. One example of the atmosphere is air.

A time for performing the heat treatment is adjustable according to the heat treatment temperature, a composition of the subject electrode, etc. For example, such a temperature and a time causing the heat treatment to diminish an organic component contained in the subject electrode by a weight corresponding to 10% or more and 90% or less of the weight of the entire organic component contained may be set for the heat treatment. The subject electrode here does not retain an electrolyte. Examples of the organic component may thus include a carbon material constituting the conductor and an organic substance constituting the binder. Setting the weight of the organic component diminished by the heat treatment to 10% or more of the total weight of the organic component secures decomposition of a sufficient amount or portion of the binder and allows the first current collector to be easily separated from the active material and the conductor. Setting the weight of the organic component diminished by the heat treatment to 90% or less of the total weight of the organic component enables prevention of loss of the conductor due to the heat treatment.

The active material contained in the subject electrode is not particularly limited. The active material may be either a positive electrode active material or a negative electrode active material. Also, the active material contained in the electrode may be constituted by one, two, or more kinds of active materials. The active material may take the form of particles.

In one example, the active material is capable of absorbing and releasing lithium ions (Li⁺). Examples of the active material may include active materials substantially free of Li. Such an active material substantially free of Li may be, for example, an active material containing no Li, or an active material containing, although having involved no Li during the synthesis, residual Li present due to an irreversible reaction that could take place during a lithium ion (Li⁺) absorbing and releasing reaction or during a charge and discharge reaction. The active material substantially free of Li can avoid, for example, generation of lithium carbonate (Li₂CO₃) caused by reaction with a moisture content in the atmosphere, etc. It is therefore possible to suppress occurrence of active material deterioration in the course of the heat treatment performed for the subject electrode in air.

Examples of the active material include Si, carbonaceous substances, and oxides. Each of these substances is capable of absorbing and releasing lithium ions. Also, each of these substances may be an active material substantially free of Li.

Examples of the carbonaceous substances may include graphite, carbon fiber, coke, and non-graphitizable carbon.

Examples of the oxides include a titanium-containing oxide and a niobium-containing oxide. Examples of the titanium-containing oxide include a lithium titanium oxide, a monoclinic titanium dioxide (TiO₂(B)), an anatase titanium dioxide, a rutile titanium dioxide, a hollandite titanium composite oxide, and an orthorhombic titanium-containing composite oxide. Examples of the niobium-containing oxide include a niobium oxide, a niobium titanium-containing oxide, a niobium tungsten-containing oxide, and a niobium titanium molybdenum-containing oxide.

Such niobium-containing oxides may show a lower electron conductivity than a carbonaceous substance. Note that the active material containing the niobium-containing oxide may be introduced together with a conductor into a mixture obtained by step S2, which will be described later, so that a contact between the active material and the conductor in a recycled electrode will be easily maintained. In this manner, a recycled electrode having a good electron conductivity can be provided.

Examples of the niobium oxide include Nb₂O₅.

Examples of the niobium titanium-containing oxide include a monoclinic niobium titanium-containing oxide, and a substituted niobium titanium composite oxide whose Nb and/or Ti are at least partially substituted with a hetero element or elements. Such substituting elements are, for example, Na, K, Ca, Co, Ni, Si, P, V, Cr, Mo, Ta, Zr, Mn, Fe, Mg, B, Pb, Al, and so on. The substituted niobium titanium composite oxide may contain a single kind or two or more kinds of substituting elements.

The monoclinic niobium titanium-containing oxide is characterized by having a highly stable crystalline structure, excellent resistance to water, acid, and alkali, and a large density. Examples of such a niobium titanium-containing oxide having a monoclinic structure include Nb₂TiO₇, Nb₂Ti₂O₉, Nb₁₀Ti₂O₂₉, Nb₁₄TiO₃₇, and Nb₂₄TiO₆₂. As another example, the monoclinic niobium titanium-containing oxide may be a compound represented by LiₓTi_{1-y}M1_{y}Nb_{2-z}M2_{z}O_{7+δ}. Here, M1 is at least one selected from the group consisting of Zr, Si, and Sn. M2 is at least one selected from the group consisting of V, Ta, and Bi. The respective indices in the composition formula are 0 ≤ x ≤ 5, 0 ≤ y < 1, 0 ≤ z < 2, and -0.3 ≤ δ ≤ 0.3. Yet another example of the monoclinic niobium titanium-containing oxide is LiₓNb₂TiO₇, where 0 ≤ x ≤ 5. This LiₓNb₂TiO₇, where 0 ≤ x ≤ 5, has a density of 4.34 g/cm³.

As still another example, the monoclinic niobium titanium-containing oxide may be a compound represented by LiₓTi_{1-y}M3_{y+z}Nb_{2-z}O_{7-δ}. Here, M3 is at least one selected from the group consisting of Mg, Fe, Ni, Co, W, Ta, and Mo. The respective indices in the composition formula are 0 ≤ x ≤ 5, 0 ≤ y < 1, 0 ≤ z < 2, and -0.3 ≤ δ ≤ 0.3.

Examples of the niobium tungsten-containing oxide include Nb₁₄W₃O₄₄, Nb₁₆W₅O₅₅, and Nb₁₈W₈O₆₉.

Examples of the niobium titanium molybdenum-containing oxide include: a tetragonal titanium niobium molybdenum composite oxide represented by the general formula LiₐTi_{b}Nb_{2-2d}MO_{c+2d}O_{2b+5+3c}, where indices a, b, c, and d are preferably in the respective ranges of 0 ≤ a ≤ b+4+3c, 0.3 ≤ b ≤ 1.6, 0.3 ≤ c < 1.6, and 0 ≤ d < 0.4; a composite oxide represented by the general formula LiₐM_{b}NbMo_{c}O_{d}, where M is one or more selected from the group consisting of Ti, V, Ta, Fe, Co, Mn, Ni, Bi, Sb, As, P, Cr, W, B, Na, K, Mg, Al, Ca, Y, and Si and where 0 ≤ a ≤ b+2+3c, 0 ≤ b ≤ 1.4, 0 ≤ c ≤ 0.5, and 2.33 ≤ d/(1+b+c) ≤ 2.50; and so on.

The niobium titanium-containing oxide may contain inevitable impurities. Examples of the inevitable impurities include K, Na, Si, and P.

### <Step S2>

A mixture containing the active material and the conductor is obtained by separating the first current collector from the heat-treated object.

In the heat-treated object obtained by step S1, at least a part of the binder has been decomposed and diminished. The first current collector, although heat-treated, has been kept from melting and is not present in the form of a melt. The conductor and the active material have also been subjected to the heat treatment. The active material is in the state where at least a part of it is in contact with the conductor. In the heat-treated object, the bonding force to unite the conductor and the active material with the first current collector has been weakened, and therefore, the first current collector can be easily separated from the conductor and the active material.

As the separation, the heat-treated first current collector may be taken out from the heat-treated object through one or more of peeling, picking, suctioning, centrifugal separation, sieving, and so on. The separation may or may not follow a pre-step where the heat-treated object is pulverized or subjected to application of ultrasonic vibration. The separation of the heat-treated first current collector from the heat-treated object, however, can be easily done without pulverizing or applying ultrasonic vibration to the heat-treated object. Accordingly, the active material and the conductor can avoid damage from shocks or the like. Also, not pulverizing or segmenting the heat-treated first current collector permits the original size to be substantially maintained, which can further facilitate the easy removal of the heat-treated first current collector.

### <Step S3>

An electrode is manufactured using the mixture containing the active material and the conductor.

The active material and the conductor have undergone the heat treatment at the temperature below the melting point of the first current collector, which means that the influence of the heat treatment has been successfully suppressed. Since the mixture contains the active material and the conductor, electrically conductive paths among active material particles will be easily maintained in the electrode manufactured using the mixture, and consequently, the manufactured electrode can have less active material deterioration and provide improved battery performance.

In the case where a carbon material constitutes the conductor, the mixture may contain the carbon material in an amount of 0.1 mass% or more and 10 mass% or less. Setting the content of the carbon material in the mixture to 0.1 mass% or more enables obtaining an electrode having good conductive paths among active material particles. Also, setting the content of the carbon material in the mixture to 10 mass% or less enables obtaining an electrode having a practical capacity.

The mixture may contain the binder in an amount not disturbing the separation in step S2.

The electrode manufacture may be carried out by, for example, a method including steps S11 to S15 illustrated in FIG. 2. Particulars of steps S11 to S15 will be described.

### <Step S11>

Slurry is prepared using the mixture containing the active material and the conductor, obtained by step S2. The respective amounts of the active material and the conductor remain almost the same as their initial values even after step S2. Thus, the amounts of the active material and the conductor in the mixture can be estimated based on the composition of the active material-containing layer in the subject electrode. To the mixture containing the active material and the conductor, a binder and a solvent are added so as to yield a targeted composition. An additional amount of the active material and/or the conductor may be added as needed. Following the adding, slurry is prepared by mixing these components. One example of the solvent is water. The slurry may have a composition the same as, or different from, the composition of the active material-containing layer in the subject electrode. For example, a kind of the binder in the slurry may differ from the kind of the binder contained in the subject electrode.

Note that the slurry may be prepared by measuring the amounts of the active material and the conductor in the mixture, adding the active material, the conductor, the binder, the solvent, and so on to the mixture based on the acquired measurement values, and mixing these components.

The mixture containing the active material and the conductor may be pulverized in advance of the slurry preparation. The pulverizing here can place the particle size of the mixture in a targeted range.

### <Step S12>

The slurry is applied onto a second current collector for coating.

This coating application is performed for at least a part of the second current collector. For example, only one or both of the major surfaces of the second current collector may be subjected to the slurry application. The major surfaces of the second current collector refer to surfaces defining the thickness of the second current collector or surfaces crossing the thickness direction of the second current collector.

The second current collector may be the first current collector that has been separated from the subject electrode or an unused current collector. The second current collector may be a different current collector from the first current collector.

### <Step S13>

The applied slurry is dried. This forms an active material-containing layer on the second current collector.

Exemplary blending ratios of the active material, the conductor, and the binder in the active material-containing layer are 68 mass% or more and 96 mass% or less, 2 mass% or more and 30 mass% or less, and 2 mass% or more and 30 mass% or less, respectively.

### <Step S14>

The second current collector supporting the formed active material-containing layer is subjected to a pressing process. An electrode as a second electrode is thus obtained. The obtained electrode may further be subjected to a cutting process as will be explained in relation to step S15 in order to conform to a given shape or size.

Since the active material and the conductor were once mixed at the time of the manufacture of the subject electrode (first electrode), the obtained electrode (second electrode) has a surface of which properties (e.g., hydrophilic property, hydrophobic property, etc.) are kept stable. Accordingly, the newly manufactured electrode here shows a high adhesion between the active material-containing layer and the second current collector and excels in charge and discharge efficiency.

### <Step S15>

Cutting is performed so as to set the electrode to a given shape or size. If the electrode obtained from the pressing step has an intended shape or size, step S15 may be omitted.

The manufactured electrode as the second electrode may have an equivalent or similar structure to the subject electrode as the first electrode. Details of such a structure may be as described for the examples shown in FIGS. 3 to 5.

Steps S11 to S15 may be substituted with the following method. An active material, a conductor, and a binder are added to the mixture containing the active material and the conductor to yield a targeted composition. Subsequently, the resultant mixture is shaped into one or more pellets. Such one or more pellets are put on the current collector to form the electrode.

Descriptions will be given of a method for measuring a decomposition temperature of the binder, a technique of thermogravimetric measurement, a method for measuring a content of the conductor in the mixture, and a method for checking a positive or negative electrode active material.

Note that, in instances where the electrode (either a positive electrode or a negative electrode) to be measured is located within a battery, the electrode may be taken out from the battery in the following manner. First, the battery with the inside electrode is disassembled in a glove box filled with argon. The to-be-measured electrode is picked out from the disassembled battery. This electrode is washed with a suitable solvent. Examples of the solvent that may be used for the washing include methyl ethyl carbonate. The washed electrode is dried under vacuum. The to-be-measured electrode is thus obtained.

### <Method for Measuring Decomposition Temperature of Binder>

The decomposition temperature of the binder is measured according to, for example, evolved gas analysis-mass spectrometry (EGA-MS). This analysis technique utilizes measurement of a temperature profile of the gas generated from a sample. Detection is done by mass spectrometry (MS). Approximately 1 mg of the active material-containing layer (electrode mixture) of the to-be-measured electrode, taken out in the above manner, is sampled and placed in a sample cup for the analysis according to EGA-MS. In one example, the measurement is carried out with a temperature increase rate of 10 °C/min. Details of the measurement conditions are as follows.

For the heating temperature with a pyrolyzer, conditions are set so that the sample is maintained for 4 minutes at 40 °C and then heated to 600 °C at a temperature increase rate of 10 °C/min. A sample amount of approximately 1 mg is adopted.

For gas chromatography (GS), an inlet temperature of 300 °C and a column of ultra alloy DTM 2.5 m 0.15 mm i.d. are adopted. Temperature is kept at 300 °C. A split ratio is 1:50. A flow rate of He is 1.0 mL/min. For MS, a mass range is from 10 to 600 m/z. An ionization technique of electron impact (EI) or electron ionization is adopted.

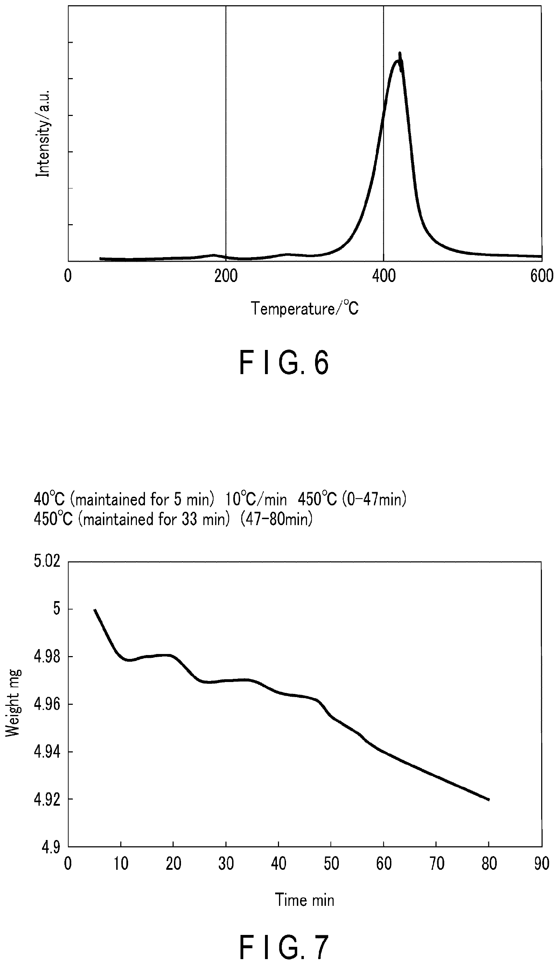

One example of the measurement result is shown in FIG. 6. In FIG. 6, the horizontal axis represents temperature. The vertical axis represents an intensity of obtained mass ions, where any unit may be used. In the example shown in FIG. 6, a peak appears in the range from 350 °C to 450 °C. As such, the decomposition temperature of the binder can be assumed to be from approximately 350 °C to approximately 450 °C. In the example shown in FIG. 6, the temperature at which the intensity reaches its maximum, i.e., the peak, is approximately 420 °C. The heat treatment temperature (e.g., a calcination temperature) used in step S1 may be set to this temperature (e.g., approximately 420 °C) corresponding to the maximum intensity, i.e., the peak, so that the decomposition of the binder can be promoted. This can accordingly diminish substantially the entire portion of the binder.

### <Qualitative Analysis of Binder>

An organic component contained in the subject electrode may be specified according to pyrolysis-gas chromatography-mass spectrometry (Pyro-GC-MS). This analysis technique utilizes instantaneous pyrolysis in which a sample is heated and decomposed at a set pyrolysis temperature, and analyzes the instantaneously pyrolyzed substance according to gas chromatography-mass spectrometry (GC-MS). The analysis conditions are as follows.

Approximately 1 mg of the active material-containing layer (electrode mixture) of the to-be-measured electrode is sampled and placed in a sample cup for the analysis according to EGA-MS.

### <Pyrolyzer>

A heating temperature is from 400 °C to 700 °C.

A sample amount is approximately 1 mg.

### <GC>

An inlet temperature is 300 °C.

As a column, UA-5 (HT/MS) 30 m 0.25 mm i.d. is used. As the temperature conditions, the sample is maintained for 2 minutes at 40 °C and then heated to 320 °C at a temperature increase rate of 10 °C/min.

A split ratio is 1:50.

A flow rate of He is 1.0 mL/min.

### <MS>

A mass range is from 10 to 600 m/z.

An ionization technique is electron impact (EI) or electron ionization.

### <Thermogravimetric Measurement: Method for Measuring Content of Conductor in Mixture>

A relationship between the heat treatment temperature, at which the subject electrode is heat-treated, and the reduction in the weight of the organic component, as well as the content of the conductor in the mixture may be measured according to, for example, thermogravimetry (TG). The measurement conditions in thermogravimetry are as follows. As a gas flow, air is used at a flow rate of 100 mL/min. The active material-containing layer of the subject electrode as the sample is heated from 40 °C to 900 °C at a temperature increase rate of 10 °C/min. One example of the measurement result of the thermogravimetry is shown in FIG. 7. In FIG. 7, the horizontal axis represents a time (minutes) corresponding to the heat treatment temperature. The vertical axis represents a weight (mg). First, a weight of the entire organic component contained in the subject electrode is obtained based on the weight of a sample of the subject electrode from which the contained organic component has been entirely removed by heating this sample to increase its temperature from 40 °C to approximately 900 °C. The obtained weight of the entire organic component is assumed to be a weight of the carbon material serving as the conductor. This sample (active material-containing layer) of the subject electrode is subjected to a process in which it is maintained at 40 °C for the first 5 minutes as seen from FIG. 7. Subsequently, it is heated from 40 °C to 450 °C at a temperature increase rate of 10 °C/min. The temperature increase takes 47 minutes. Upon keeping it at 450 °C for 33 minutes, a weight reduction is observed as seen from FIG. 7. The weight reduction which occurs during the period after the 47th minute to the 80th minute is approximately 0.05 mg. Supposing that the entire amount of the organic component is 0.5 mg, a ratio of weight reduction of the organic component realized by the 450 °C heat treatment to this entire amount is 10%. As such, heat-treating the subject electrode at 450 °C for 33 minutes can decompose and diminish a 10 weight% equivalent of the organic component contained in the subject electrode.

Note that the measurement subject explained with reference to FIG. 7 is a subject electrode as a first electrode. Instead of the subject electrode, the mixture obtained in step S2 may be heated to 900 °C under the same conditions as discussed above and measured for its weight reduction so as to obtain a weight of the carbon material serving as the conductor contained in the mixture. The content of the conductor in the mixture is thus obtained from the obtained weight and the entire weight of the mixture.

### <Positive Electrode Active Material>

The crystalline structure and the elemental composition of a positive electrode active material may be verified by powder X-ray diffraction (XRD) measurement, inductively coupled plasma (ICP) emission spectrometry, etc.

### <Negative Electrode Active Material>

The crystalline structure and the elemental composition of a negative electrode active material may be verified by powder X-ray diffraction (XRD) measurement, inductively coupled plasma (ICP) emission spectrometry, etc.

### <XRD Measurement Method>

As one example, the powder X-ray diffraction (XRD) measurement method for the positive electrode active material and the negative electrode active material may be conducted in the following manner.

First, the active material is pulverized as needed to prepare a sample having an average particle size of approximately 5 um. The average particle size may be confirmed according to a laser diffraction method. The obtained sample is provided to fill a holder portion of an approximately 0.2 mm depth formed at an upper part of a glass sample plate. Subsequently, another glass plate is placed and pushed from outside so as to flatten the surface of the provided sample. Due attention may be paid to prove a right amount of the sample for filling, without an excess or deficiency, so that no crack, void, unevenness, etc. would occur in the sample after the filling. Due attention may also be paid to pushing on the glass plate with a sufficient pressure. Next, the glass plate filled with the sample is set in a powder X-ray diffractometer, and an XRD pattern is acquired using Cu-Kα rays.

Note that, in one example, the measurement of the average particle size according to the laser diffraction method is performed in the following manner. The average particle size measurement is performed using a laser diffraction-type particle size measurement apparatus such as Shimadzu SALD-300 available from Shimadzu Corporation or an apparatus having comparable functions. Approximately 0.1 g of the sample is put into a beaker together with a surfactant and 1 to 2 mL of distilled water. After thorough stirring, the mixture is introduced into a stirring vessel and subjected to light intensity distribution measurement 64 times at intervals of 2 seconds. Based on the obtained particle size distribution data, the average particle size is obtained.

Whether or not the conductor is contained in the mixture obtained in step S2 may be confirmed in, for example, the following manner. First, the mixture is pulverized to prepare a sample having an average particle size of less than approximately 5 um. The average particle size may be confirmed according to a laser diffraction method. The conditions of the laser diffraction method are as described above. For the obtained sample, an XRD pattern is acquired under the conditions as described above.

As described above, the electrode recycling method according to the first approach includes the steps of: performing a heat treatment on as a first electrode, the subject electrode including a first current collector and an active material-containing layer, the active material-containing layer containing an active material, a binder, and a conductor, the heat treatment being performed at a temperature below a melting point of the first current collector to decompose the binder and obtain a heat-treated object; separating the first current collector from the heat-treated object to obtain a mixture containing the active material and the electric conductor; and manufacturing as a second electrode an electrode using the mixture. With the method according to the approach, the binder in the subject electrode can be diminished by decomposition, and accordingly, the first current collector can be easily separated from the obtained heat-treated object without pulverizing the heat-treated object. Moreover, since the mixture obtained by the separation contains the electric conductor, formation of the conductive paths among active material particles in the electrode manufactured using the mixture can be easily secured, and consequently, the manufactured electrode can have less active material deterioration and show improved electrode performance. Even more, as the subject electrode, use of a disposed or to-be-disposed electrode produced in the course of a manufacturing process allows for an enhanced recycling rate in the manufacturing process.

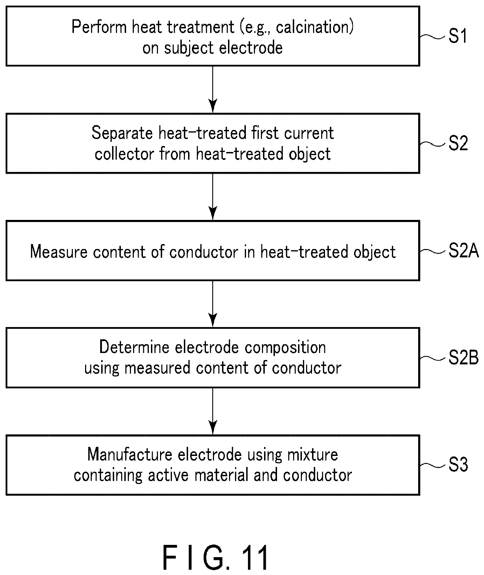

Also according to the first approach, an electrode recycling method II including steps as will be described may be provided. A description will be given of this electrode recycling method II with reference to FIG. 11. The electrode recycling method II includes the steps corresponding to steps S1 to S3 in the electrode recycling method I described with reference to FIG. 1. The electrode recycling method II includes the following steps after step S2.

One (hereinafter, "step S2A") is a step of measuring a content of the conductor in the mixture obtained in step S2.

Another one (hereinafter, "step S2B") is a step of determining the composition of the to-be-manufactured electrode (second electrode) based on the content of the conductor.

The electrode recycling method II includes, after step S2B, a step where the electrode having the determined composition is manufactured using the mixture as aforementioned step S3 (hereinafter, "step S3A"). Each of these steps S2A, S2B, and S3A will be described in more detail.

### <Step S2A>

The content of the conductor in the mixture obtained in step S2 is measured.

The method for measuring the content of the conductor in the mixture is as described above. It will be assumed that a niobium-containing oxide is used as an active material. A niobium-containing oxide has a higher thermal stability than the electric conductor containing a carbon material. In other words, as compared to the active material, the conductor is susceptible to a heat treatment. By measuring the content of the conductor and contrasting the measured value with the composition of the active material-containing layer of the subject electrode for recycling, the amount of composition change due to the heat treatment can be specified.

Note that the mixture here may contain a binder in an amount not disturbing the separation in step S2.

### <Step S2B>

The composition of the to-be-manufactured electrode, more accurately, the composition of the active material-containing layer of the to-be-manufactured electrode, is determined based on the content of the conductor in the mixture. One example of the determining method will be described. The content of the conductor in the mixture is compared to the content of the conductor in the active material-containing layer of the recycling subject electrode (namely, the initial content). If, for example, the comparison result shows that the conductor content in the mixture substantially equals the initial content, the amount of the active material can also be deemed to be substantially equal to its initial amount. Based on the comparison result, the composition of the active material-containing layer of the to-be-manufactured electrode is determined. In order for the subsequent slurry preparing step S11 to yield the determined composition, components (e.g., a binder) other than the active material and the conductor, and as needed, an additional amount of at least one of the active material and/or the conductor, are added to the mixture.

In the determined composition, it is preferable that the content of the carbon material in the mixture be 0.1 mass% or more and 10 mass% or less. Setting the content of the carbon material in the mixture to 0.1 mass% or more and 10 mass% or less allows good conductive paths to be formed among active material particles while securing a practical capacity.

### <Step S3A>

An electrode having the determined composition is manufactured using the mixture.

The electrode manufacture may be carried out by, for example, a method including steps S11 to S15 described with reference to FIG. 2. Here, step S11 prepares the slurry using the mixture containing the active material and the conductor in such a manner as to yield the composition determined in step S2B.

As described above, the electrode recycling method II includes the step of measuring the electric conductor content in the mixture and the step of determining the composition of the to-be-manufactured electrode as a second electrode based on the conductor content. This can suppress the variations in composition of the to-be-manufactured electrodes, and accordingly, a stable quality of the recycled electrodes can be guaranteed.

### (Second Approach)

The second approach relates to a method for manufacturing a battery using as a second electrode an electrode manufactured according to the first approach. The second approach encompasses processes of preparing as a second electrode an electrode through the method according to the first approach, preparing an electrode group including the prepared electrode as a negative electrode, putting the electrode group in a container member, having the electrode group put in the container member retain an electrolyte, and sealing the container member. The electrode group may include a positive electrode in addition to the negative electrode. The electrode group may also include a separator.

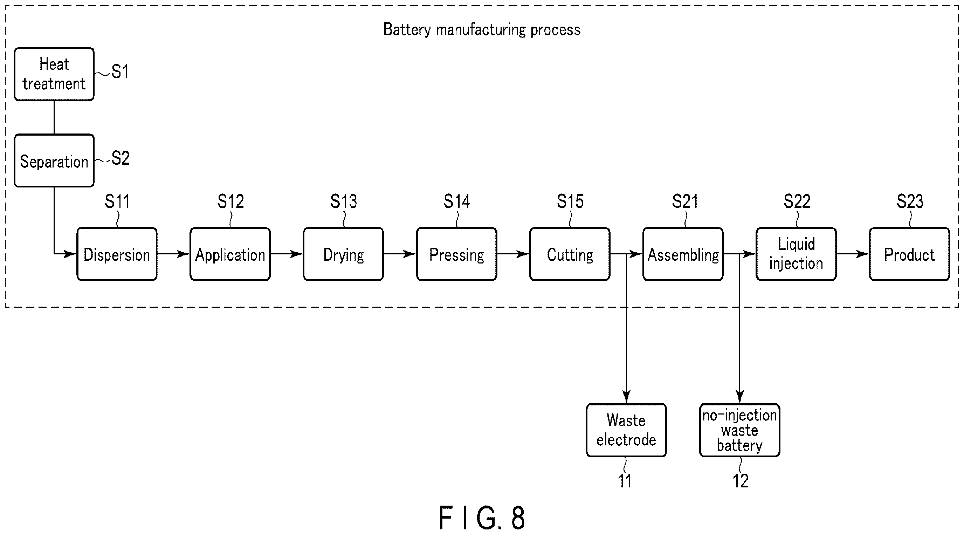

FIG. 8 shows a flowchart showing an exemplary flow of the battery manufacturing method according to the second approach. First, a waste electrode 11 is arranged for as the subject electrode 1 (first electrode). The waste electrode 11 may be, for example, any of an irregular or out-of-spec electrode, an electrode which has been stored in an unused state, an electrode fragment or scrap produced from a cutting step, etc. The waste electrode 11 may instead be an electrode taken out from an injection-undone waste battery 12 which may be produced in the course of a battery manufacturing process. The injection-undone waste battery 12 refers to a battery which has main components such as an electrode within it but into which no electrolyte liquid has been injected due to its irregularity or other circumstances. An exemplary taking-out method applicable to the battery will be described later. In any case, the waste electrode 11 does not retain an electrolyte. The composition of the active material-containing layer of the waste electrode 11 is known. Also, since the waste electrode 11 has not undergone charge and discharge processes, its active material involves almost no deterioration. As such, use of the active material and the conductor separated from the waste electrode 11 enables easy reproduction of the electrode including an active material-containing layer having the same composition as the active material-containing layer of the waste electrode 11.

Steps S1 and S2 are performed to obtain a mixture containing the active material and the conductor from the waste electrode 11. Particulars of steps S1 and S2 are as described for the first approach. After the steps S1 and S2, the steps S2A and S2B may be performed. Particulars of steps S2A and S2B are as described for the first approach.

Next, One of the electrode manufacturing step S3 or the electrode manufacturing step S3A is performed by, for example, proceeding with steps S11 to S15.

The electrode manufacturing here starts with the dispersion step S11, namely, slurry preparation using the mixture. Particulars of step S11 are as described for the first approach.

Then, steps S12 to S15, i.e., the respective coating, drying, pressing, and cutting steps, are performed in this order to manufacture the electrode. Particulars of steps S12 to S15 are as described for the first approach.

Subsequently, an assembling step S21 is performed where an electrode group including, as a negative electrode, the prepared electrode is formed and then placed in a container member. In one example, the electrode group is formed with a separator arranged between a positive electrode and the negative electrode. The electrode group is not limited to a particular shape or structure but may adopt any of, for example, a structure in which the positive electrode, the separator, and the negative electrode are stacked, a structure in which the positive electrode, the separator, and the negative electrode are wound in a flat or cylindrical shape, a structure in which the positive electrode, the separator, and the negative electrode are bent in a zigzag pattern, and so on.

Subsequently, a liquid injecting step S22 is performed where the electrode group placed in the container member is made to retain an electrolyte, followed by the sealing of the container member.

Thereafter, a processing step S23 for forming a product, including initial charging, aging, etc., is performed and the battery is thereby obtained.

Examples of the positive electrode, the separator, the electrolyte, and the container member used in the above steps will be described.

### <Positive Electrode>

In one example, the positive electrode includes a positive electrode current collector and one or more positive electrode active material-containing layers supported on one or both of the surfaces (one or both of the major surfaces) of the positive electrode current collector. The positive electrode active material-containing layer contains a positive electrode active material. The positive electrode active material-containing layer may also contain a binder, a conductor, or both of them.

Examples of the positive electrode active material include: LiₓM_{y}O₂, where 0 < x ≤ 1, 0 < y ≤ 1 and M is, for example, Mn; LiₓM_{2y}O₄, where 0 < x ≤ 1, 0 < y ≤ 1 and M is, for example, Mn; a lithium phosphate having an olivine structure, such as LiₓM_{y}PO₄, where M is one or more elements selected from Mn, Ni, Co, and Fe, 0 < x ≤ 1.1, and 0.8 ≤ y ≤ 1.1, LiₓFePO₄, where 0 < x ≤ 1.1, LiₓFe_{1-y}Mn_{y}PO₄, where 0 < x ≤ 1.1 and 0 ≤ y ≤ 1, LiₓCoPO₄, where 0 < x ≤ 1.1, and LiₓMnPO₄, where 0 < x ≤ 1.1; a lithium nickel cobalt composite oxide such as LiₓNi₁₋ₐCOₐO₂, where 0 < x ≤ 1 and 0 < a ≤ 1; a lithium cobalt composite oxide such as LiₓCoO₂, where 0 < x ≤ 1; a lithium nickel manganese cobalt composite oxide such as LiₓNi_{1-a-b}MnₐCo_{b}O₂, where 0 < x ≤ 1, 0 < 1-a-b < 1, 0 < a < 1, and 0 < b < 1; a lithium manganese cobalt composite oxide such as LiₓMn₁₋ₐCoₐO₂, where 0 < x ≤ 1 and 0 < a < 1; a spinel-type lithium manganese nickel composite oxide such as LiₓMn₂₋ₐNiₐO₄, where 0 < x ≤ 1 and 0 < a ≤ 2; and a fluorinated iron sulfate having a tavorite structure, such as LiₓM_{y}SO₄F, where 0 < x ≤ 1, 0 < y ≤ 1, and M is at least one of Fe and/or Mn, and LiₓFe₁₋ₐMnₐSO₄F, where 0 < x ≤ 1 and 0 < a ≤ 1. The positive electrode active material here may be constituted by one, two, or more kinds of active materials.

The positive electrode active material-containing layer may contain an electric conductor. Examples of the conductor include acetylene black, carbon black, and graphite. The conductor here may be constituted by one, two, or more kinds of conductors.

The positive electrode active material-containing layer may also contain a binder. Examples of the binder include polytetrafluoroethylene (PTFE), polyvinylidene fluoride (PVdF), fluorine-based rubber, and an acrylic material. The binder here may be constituted by one, two, or more kinds of binders.

The positive current collector may contain at least one of aluminum and/or aluminum alloy. In one example, aluminum foil or aluminum alloy foil is used as the positive electrode current collector.

Preferable blending ratios of the positive electrode active material, the conductor, and the binder are 80 mass% or more and 95 mass% or less, 3 mass% or more and 19 mass% or less, and 1 mass% or more and 7 mass% or less, respectively.

The positive electrode is prepared by, for example, suspending the positive electrode active material, the conductor, and the binder in a suitable solvent, applying the suspension onto the positive electrode current collector, and subjecting the resultant to drying and pressing processes. The following method may instead be adopted to prepare the positive electrode. First, the active material, the conductor, and the binder are mixed to obtain a mixture. Subsequently, the mixture is shaped into pellets. The pellets are then arranged on the current collector so that the positive electrode is obtained.

### <Separator>

The separator may be prepared using any of, for example, a porous film, a nonwoven fabric made of synthetic resin, a solid electrolyte layer, and so on.

### <Electrolyte>

As the electrolyte, for example, any of an aqueous electrolyte, a nonaqueous electrolyte, etc. may be used. The nonaqueous electrolyte may be, for example, a nonaqueous electrolyte liquid prepared by dissolving an electrolyte salt such as a lithium salt in an organic solvent. The aqueous electrolyte may be, for example, an aqueous electrolyte liquid prepared by dissolving an electrolyte salt such as a lithium salt in a water-based solvent. Examples of the electrolyte salt include a lithium salt such as lithium perchlorate (LiClO₄), lithium hexafluorophosphate (LiPF₆), lithium tetrafluoroborate (LiBF₄), lithium hexafluoroarsenate (LiAsF₆), lithium trifluoromethanesulfonate (LiCF₃SO₃), and lithium bis(trifluoromethylsulfonyl)imide (LiN(CF₃SO₂)₂).

### <Container member>

As the container member, for example, a container made of a laminate film or a metal container may be used.

The container member is not limited to a particular shape. The container member may have any of, for example, a flat (thin) shape, a rectangular shape, a cylindrical shape, a coin shape, a button shape, and so on. The container member may be discretionarily selected according to the dimensions, use, etc., of the battery.

The battery manufactured or to be manufactured according to the approach is not particularly limited. Examples of the battery include a battery with an aqueous electrolyte and a battery with a nonaqueous electrolyte. The battery may be provided in any form such as a single battery, a battery module, or a battery pack.

The battery manufactured through the method according to the approach may be used as a battery module or incorporated into a battery pack. The battery according to the approach is suitably applied to uses where high cycle performance is required upon discharging at a large current. More specifically, the battery may be used as a power source for a digital camera, as a battery for a variety of vehicles including, for example, a two to four-wheel hybrid electric vehicle, a two to four-wheel electric vehicle, an assist bicycle, and a railway vehicle (such as a train), or as a stationary battery. The battery is particularly suitably used as an on-vehicle battery mounted on a vehicle.

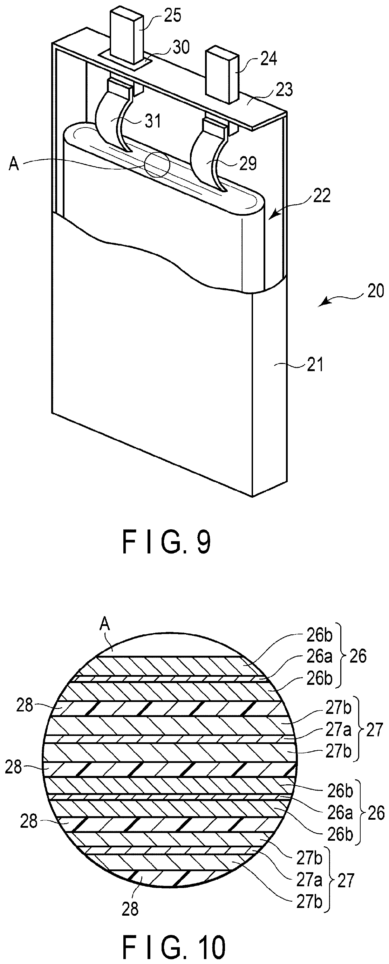

One example of the battery (a secondary battery) will be described with reference to FIGS. 9 and 10. FIG. 9 is a partially cutaway perspective view showing a nonaqueous electrolyte secondary battery which is one example of the battery. FIG. 10 is an enlarged sectional view of a part A of the nonaqueous electrolyte secondary battery shown in FIG. 9. As shown in FIG. 9, this nonaqueous electrolyte battery 20 includes a metal container 21 having a bottomed rectangular cylindrical shape, a flat electrode group 22, a metal sealing plate 23, a negative electrode terminal 24, and a positive electrode terminal 25. The flat electrode group 22 is housed in the metal container 21.

The flat electrode group 22 includes a negative electrode 26, a positive electrode 27, and a separator 28. The electrode group 22 has a structure in which the negative electrode 26 and the positive electrode 27 are, with the separator 28 interposed therebetween, spirally wound into a flat shape. Note that the description here assumes a wound electrode group, but the electrode group may instead be a stacked electrode group in which multiple layers of negative electrodes 26, separators 28, and positive electrodes 27 are stacked. The negative electrode 26 includes, as shown in FIG. 10, a negative electrode current collector 26a and a negative electrode active material-containing layer 26b supported on the negative electrode current collector 26a. The positive electrode 27, as shown in FIG. 10, includes a positive electrode current collector 27a and a positive electrode active material-containing layer 27b supported on the positive electrode current collector 27a. The electrode group 22 retains an electrolyte (not illustrated in the figures). The opening of the metal container 21 is sealed with the metal sealing plate 23. The metal container 21 and the sealing plate 23 constitute the container member.

As shown in FIG. 9, the metal sealing plate 23 is furnished with the negative electrode terminal 24. To the negative electrode terminal 24, a negative electrode tab 29 is electrically connected. The negative electrode tab 29 is electrically connected to the negative electrode current collector 26a of the negative electrode 26. The positive electrode terminal 25 is fixed to the metal sealing plate 23 via an insulating member 30. To the positive electrode terminal 25, a positive electrode tab 31 is electrically connected. The positive electrode tab 31 is electrically connected to the positive electrode current collector 27a of the positive electrode 27.

An exemplary method for taking out an electrode from the injection-undone waste battery 12 will be described. The injection-undone waste battery 12 here may be, for example, an out-of-spec battery that is produced during the manufacture of the battery before the liquid injecting step S22. First, the container member is removed from the injection-undone waste battery 12. Then, the positive electrode and the negative electrode contained in the battery, from which the container member has been removed, are separated from each other. Each of these steps will be described in more detail.

### <Container Separation>

The injection-undone waste battery 12 is disassembled to remove the container member. The container separation process may employ a container separation apparatus.

Such a container separation apparatus may be used within a chamber together with a positive/negative electrode separation apparatus. The inside of the chamber is preferably a low oxygen atmosphere such as a nitrogen atmosphere. This can avoid the contact between the electrolyte, etc. and air at the disassembling of the battery so that the operational safety can be enhanced. The container separation apparatus performs cutting or the like to open the container member of the battery and take out the electrode group in the container member. Examples of the container separation apparatus include a cutter, a cutting machine, and a utility knife. By the container separation, the electrode group is taken out from the battery. The positive electrode and the negative electrode contained in the electrode group will then be separated from each other.

### <Positive/Negative Electrode Separation>

The positive electrode and the negative electrode contained in the electrode group are separated from each other. The positive/negative electrode separation process may employ a positive/negative electrode separation apparatus.

The positive/negative electrode separation apparatus separates the electrode group into the positive electrode, the separator, and the negative electrode. The electrode group is obtained in the form of a stack of the positive and negative electrodes with the separator therebetween (e.g., a stack including a positive electrode, a separator, a negative electrode, a separator, and a positive electrode in this order), or in the form of a wound body in which the positive electrode, the separator, and the negative electrode are wound. If, for example, the electrode group uses a continuous-type separator, an apparatus including a reel-up mechanism for the separator may be used as the positive/negative electrode separation apparatus. This enables separation of the positive electrode and the negative electrode from each other such that they are placed on the respective front and back sides of the separator. By separating the positive electrode and the negative electrodes beforehand as above, the members constituting the positive electrode and the negative electrode are not mixed and effective recycling can be facilitated. Note that, although discrete separation apparatuses, i.e., the container separation apparatus and the positive/negative electrode separation apparatus as described above, may be employed, an apparatus having both of the container separation function and the positive/negative electrode separation function may be employed.

The recycling process according to the method including steps S1 to S3 is then performed on the electrode (e.g., the negative electrode) separated from the injection-undone waste battery 12 by the container separation and the positive/negative electrode separation described above.

According to the second approach, a battery is manufactured using the electrode or electrodes recycled by the method according to the first approach, and therefore, the second approach realizes battery production with an enhanced recycling rate. Moreover, since the recycled electrodes are excellent in electron conductivity and capable of suppressing deterioration of the active material, a highly durable battery can be realized.

A concrete example of the electrode recycling method according to the approach will be set forth. First, a subject electrode is taken out from an injection-undone waste battery. If the injection-undone waste battery has a metal can-type container member, the subject electrode as the first electrode may be taken out in the following manner. The injection-undone waste battery is set in a container separation apparatus arranged inside a chamber where a nitrogen atmosphere has been set. Then, the container member (can) is cut and an electrode group is taken out. The electrode group is then passed to a positive/negative electrode separation apparatus arranged inside the chamber, and separated into a positive electrode, a separator, and a negative electrode. For example, the negative electrode is used as the subject electrode (first electrode). Instead of the negative electrode, the positive electrode may be used.

The negative electrode includes a negative electrode active material-containing layer and an aluminum-foil first current collector. The negative electrode active material-containing layer contains 80 mass% of niobium titanium oxide particles represented by Nb₂TiO₇ as a negative electrode active material, 5 mass% of acetylene black and 5 mass% of carbon nanotubes both as an electric conductor, and 10 mass% of CMC as a binder. The negative electrode is subjected to calcination at 450 °C for approximately 30 minutes in air so as to decompose the binder and provide a fired object. The decomposition temperature of CMC as the binder is approximately 350 °C. Also, the calcination temperature of 450 °C is lower by 210 °C than the melting point of the first current collector (approximately 660 °C). The calcination can thus diminish the organic component contained in the negative electrode by a weight corresponding to approximately 10% of the weight of the entire organic component contained. The organic component here is constituted by the conductor and the binder.

The fired first current collector is separated from the obtained fired object through sieving. This provides a mixture containing the negative electrode active material and the conductor. The content of the conductor in the mixture can be varied depending on temperature differences during the calcination, the position of the negative electrode within a calcination furnace, etc. The mixture contains the conductor in an amount which is at most 10 mass%. CMC and water are added to the mixture so that the composition of the to-be-formed negative electrode active material-containing layer will have a targeted composition. The mixture after this addition is pulverized into particles of a predetermined size, followed by addition of SBR and stirring for slurry preparation. The addition of SBR improves the binding property of the active material-containing layer. The obtained slurry is applied onto an aluminum-foil second current collector, and subsequently, drying and pressing are performed to provide as a second electrode an electrode. In the obtained electrode, the carbon nanotubes are present in a state as if they are entangled with the surfaces of the niobium titanium oxide particles. The acetylene black is also present at the surfaces of the niobium titanium oxide particles. As such, good conductive paths are formed among the niobium titanium oxide particles, which thus allows for the provision of an electrode having an excellent electron conductivity. Further, niobium titanium oxides are not vulnerable to deterioration by water, and therefore, the calcination process in air does not substantially deteriorate the niobium titanium oxide. Accordingly, an electrode having a long life can be realized. Moreover, since the electrode is reproduced from waste materials occurring in the course of the manufacturing process, the amount of actually disposed waste materials can be minimized. Therefore, the electrode recycling rate can be increased. Consequently, reduction in the production costs can also be realized.

The electrode recycling method according to at least one of the foregoing approaches or examples includes the steps of: performing a heat treatment on as a first electrode a subject electrode at a temperature below the melting point of the first current collector to decompose the binder; separating the first current collector from the obtained heat-treated object; and using the obtained mixture to manufacture as a second electrode an electrode. With this method, the binder in the subject electrode can be diminished by decomposition, and accordingly, the first current collector can be easily separated from the obtained heat-treated object without pulverizing the heat-treated object. Moreover, since the mixture obtained by the separation contains the electric conductor, conductive paths among the active material particles can be easily formed and deterioration of the active material can be suppressed, and consequently, a recycled electrode showing improved performance can be provided. Even more, the electrode can be recycled from waste materials occurring in the course of the manufacturing process, and accordingly, the amount of actually disposed waste materials can be minimized. The electrode recycling rate can therefore be increased. Also, the production costs can be reduced.

Working examples of the negative electrode recycling method which have been carried out according to the above described concrete example will be set forth.

### (Working Example 1)

A negative electrode as a subject of recycling was taken out from an injection-undone waste battery. Since the container member of this injection-undone waste battery was a metal can, the subject negative electrode was taken out in the manner as described in the concrete example above.

The subject negative electrode included a negative electrode active material-containing layer and an aluminum-foil first current collector. The negative electrode active material-containing layer contained 80 mass% of niobium titanium oxide particles represented by Nb₂TiO₇ as a negative electrode active material, 5 mass% of acetylene black and 5 mass% of carbon nanotubes both as an electric conductor, and 6 mass% of CMC and 4 mass% of SBR both as a binder. The negative electrode was subjected to calcination at 450 °C for approximately 30 minutes in air so as to decompose the binder and provide a fired object. The decomposition temperature of CMC as the binder was approximately 350 °C. The decomposition temperature of SBR was approximately 400 °C. As such, the calcination temperature of 450 °C was higher than the decomposition temperature of the binder. Also, the calcination temperature of 450 °C was lower by 210 °C than the melting point of the first current collector (approximately 660 °C). By the calcination, the organic component contained in the negative electrode was diminished by a weight corresponding to approximately 10% of the weight of the entire organic component contained. The organic component here was constituted by the conductor and the binder.

The fired first current collector was separated from the obtained fired object through sieving. In this manner, a mixture containing the negative electrode active material and the conductor was obtained. The content of the conductor in the mixture was measured and the measured value was compared to the initial value (in this case, 10 mass%). The measured value was found to be less than the initial value by 1 mass%.

Slurry was prepared by adding 6 mass% of CMC and 4 mass% of SBR both as a binder, and water as a solvent, to the obtained mixture and stirring them together. The obtained slurry was applied onto an aluminum-foil second current collector and then dried and pressed, thereby preparing a negative electrode according to Working Example 1.

Charge and discharge characteristics of the negative electrode according to Working Example 1 were evaluated. The results showed that the negative electrode provided a 99% discharge capacity as compared to a brand-new negative electrode. The brand-new negative electrode was a negative electrode prepared without the material obtained from the recycling process. More specifically, the brand-new negative electrode was prepared by mixing a negative electrode active material, a conductor, a binder, and water to form slurry for yielding the same composition as the composition of the recycling subject electrode, and applying the obtained slurry onto an aluminum-foil current collector, followed by drying and pressing.

### (Working Example 2)

A mixture containing the negative electrode active material and the conductor was obtained in the same manner as in Working Example 1.

Slurry was prepared by adding 6 mass% of CMC and 4 mass% of SBR both as a binder, water as a solvent, and 1 mass% of carbon nanotubes to the obtained mixture and stirring them together. The obtained slurry was applied onto an aluminum-foil second current collector and then dried and pressed, thereby preparing a negative electrode according to Working Example 2.

Charge and discharge characteristics of the negative electrode according to Working Example 2 were evaluated. The results showed that the negative electrode provided a 100% discharge capacity as compared to the brand-new negative electrode.

### (Working Example 3)

A mixture containing the negative electrode active material and the conductor was obtained in the same manner as in Working Example 1.

Slurry was prepared by adding 6 mass% of CMC and 4 mass% of SBR both as a binder, water as a solvent, and 2 mass% of carbon nanotubes to the obtained mixture and stirring them together. The obtained slurry was applied onto an aluminum-foil second current collector and then dried and pressed, thereby preparing a negative electrode according to Working Example 3.

Charge and discharge characteristics of the negative electrode according to Working Example 3 were evaluated. The results showed that the negative electrode provided a 98% discharge capacity as compared to the brand-new negative electrode.

While certain approaches have been described, these approaches have been presented by way of example only, and are not intended to limit the scope of the inventions. Indeed, the novel approaches described herein may be embodied in a variety of other forms; furthermore, various omissions, substitutions, and changes in the form of the approaches described herein may be made without departing from the spirit of the inventions. The accompanying claims and their equivalents are intended to cover such forms or modifications as would fall within the scope and spirit of the inventions.

The present disclosure also encompasses the following approaches of an electrode recycling method, and a battery manufacturing method:
1. An electrode recycling method comprising:
   performing (S1) a heat treatment on a first electrode (1), the first electrode (1) including a first current collector (2) and an active material-containing layer (3) supported by the first current collector (2), the active material-containing layer (3) containing an active material, a binder, and a conductor, the heat treatment being performed at a temperature below a melting point of the first current collector (2) to decompose the binder and obtain a heat-treated object;
   separating (S2) the first current collector (2) from the heat-treated object to obtain a mixture containing the active material and the conductor; and
   manufacturing (S3) a second electrode using the mixture.
2. The electrode recycling method according to clause 1, wherein the conductor comprises a carbon material.
3. The electrode recycling method according to clause 2, wherein the carbon material comprises a carbon nanotube.
4. The electrode recycling method according any one of clauses 2 to 3, wherein the mixture contains the carbon material in an amount of 0.1 mass% or more and 10 mass% or less.
5. The electrode recycling method according any one of clauses 1 to 4, wherein the temperature of the heat treatment is lower than the melting point of the first current collector (2) by at least 20 °C.
6. The electrode recycling method according any one of clauses 1 to 5, wherein the temperature of the heat treatment is equal to or higher than a decomposition temperature of the binder.
7. The electrode recycling method according any one of clauses 1 to 6, wherein the active material is substantially free of Li.
8. The electrode recycling method according any one of clauses 1 to 7, wherein the active material is an oxide.
9. The electrode recycling method according to clause 8, wherein the oxide includes at least one of a niobium-containing oxide and/or a niobium titanium-containing oxide.
10. The electrode recycling method according any one of clauses 1 to 9, wherein the heat treatment is performed in air.
11. The electrode recycling method according any one of clauses 1 to 10, wherein the heat treatment is performed to diminish an organic component contained in the first electrode (1) by a weight corresponding to 10% or more and 90% or less of a weight of the organic component.
12. The electrode recycling method according any one of clauses 1 to 11, wherein the manufacturing (S3) the second electrode comprises preparing slurry using the mixture and applying the slurry onto a second current collector.
13. The electrode recycling method according to any one of clauses 1 to 12, further comprising:
   measuring (S2A) a content of the conductor in the obtained mixture; and
   determining (S2B) a composition of the second electrode to be manufactured,
   wherein the manufacturing (S3) the second electrode comprises manufacturing the second electrode having the determined composition using the mixture.
14. A battery (20) manufacturing method comprising manufacturing a battery (20) using the second electrode manufactured by the electrode recycling method according to any one of clauses 1 to 13.

## Claims

1. An electrode recycling method comprising:
performing (S1) a heat treatment on a first electrode (1), the first electrode (1) including a first current collector (2) and an active material-containing layer (3) supported by the first current collector (2), the active material-containing layer (3) containing an active material, a binder, and a conductor, the heat treatment being performed at a temperature below a melting point of the first current collector (2) to decompose the binder and obtain a heat-treated object;
separating (S2) the first current collector (2) from the heat-treated object to obtain a mixture containing the active material and the conductor; and
manufacturing (S3) a second electrode using the mixture.

2. The electrode recycling method according to claim 1, wherein the conductor comprises a carbon material.

3. The electrode recycling method according to claim 2, wherein the carbon material comprises a carbon nanotube.

4. The electrode recycling method according any one of claims 2 to 3, wherein the mixture contains the carbon material in an amount of 0.1 mass% or more and 10 mass% or less.

5. The electrode recycling method according any one of claims 1 to 4, wherein the temperature of the heat treatment is lower than the melting point of the first current collector (2) by at least 20 °C.

6. The electrode recycling method according any one of claims 1 to 5, wherein the temperature of the heat treatment is equal to or higher than a decomposition temperature of the binder.

7. The electrode recycling method according any one of claims 1 to 6, wherein the active material is substantially free of Li.

8. The electrode recycling method according any one of claims 1 to 7, wherein the active material is an oxide.

9. The electrode recycling method according to claim 8, wherein the oxide includes at least one of a niobium-containing oxide and/or a niobium titanium-containing oxide.

10. The electrode recycling method according any one of claims 1 to 9, wherein the heat treatment is performed in air.

11. The electrode recycling method according any one of claims 1 to 10, wherein the heat treatment is performed to diminish an organic component contained in the first electrode (1) by a weight corresponding to 10% or more and 90% or less of a weight of the organic component.

12. The electrode recycling method according any one of claims 1 to 11, wherein the manufacturing (S3) the second electrode comprises preparing slurry using the mixture and applying the slurry onto a second current collector.

13. The electrode recycling method according to any one of claims 1 to 12, further comprising:
measuring (S2A) a content of the conductor in the obtained mixture; and
determining (S2B) a composition of the second electrode to be manufactured,
wherein the manufacturing (S3) the second electrode comprises manufacturing the second electrode having the determined composition using the mixture.

14. A battery (20) manufacturing method comprising manufacturing a battery (20) using the second electrode manufactured by the electrode recycling method according to any one of claims 1 to 13.
